**Europäisches Patentamt**

**European Patent Office**

**Office européen des brevets**

(19)

(11) Veröffentlichungsnummer: **0 146 758**
**A1**

(12) # EUROPÄISCHE PATENTANMELDUNG

(21) Anmeldenummer: **84113690.6**

(22) Anmeldetag: **13.11.84**

(51) Int. Cl.⁴: **A 47 J 41/00**

(30) Priorität: **02.12.83 DE 8334684 U**

(43) Veröffentlichungstag der Anmeldung:
**03.07.85 Patentblatt 85/27**

(84) Benannte Vertragsstaaten:
**AT BE CH DE FR GB IT LI LU NL SE**

(71) Anmelder: **Rotpunkt Dr. Anso Zimmermann**
**Industriestrasse**
**D-6434 Niederaula / Bad Hersfeld(DE)**

(72) Erfinder: **Zimmermann, Anso, Dr.**
**Seilerweg 34**
**D-6430 Bad Hersfeld(DE)**

(74) Vertreter: **Körber, Wolfhart, Dr. et al,**
**Patentanwälte Dipl.-Ing. H. Mitscherlich Dipl.-Ing. K.**
**Gunschmann Dr.rer.nat. W. Körber Dipl.Ing. J.**
**Schmidt-Evers Dipl.-Ing. W. Melzer Steinsdorfstrasse 10**
**D-8000 München 22(DE)**

(54) **Isolierflasche für Flüssigkeiten.**

(57) Die Isolierflasche ist umgeben von einem im Kunststoff-Blasverfahren hergestellten Schutzgehäuse (2) mit einstückig angeformtem hohlen Griff (6).

./...

Croydon Printing Company Ltd.

FIG. 1

## Isolierflasche für Flüssigkeiten

Die Erfindung bezieht sich auf eine Isolierflasche nach dem Oberbegriff des Anspruchs 1.

Solche Isolierflaschen sind allgemein gebräuchlich und bekannt. Sie weisen im Hinblick auf ihre Verwendung als in Taschen oder dergleichen einzupackende Flaschen ein langgestrecktes Gehäuse auf, das zum Gebrauch der Isolierflasche mit der Hand zu umgreifen ist. In der Regel weisen die bekannten Isolierflaschen auf ihrer Mantelfläche konkave oder konvexe Flächenverformungen auf, um die Grifffestigkeit zu erhöhen.

Die bekannten Maßnahmen reichen jedoch nicht aus, um eine bequeme Handhabung der Isolierflasche zu gewährleisten. Man denke hier zum Beispiel an alte Leute oder Kinder, für die die Handhabung der bekannten Isolierflaschen mit Unsicherheit verbunden ist, oder auch nur schlecht möglich ist.

Im Hinblick auf die Tatsache, daß Isolierflaschen ein Massenprodukt sind, stellt sich die Forderung nach einer preiswerten Lösung des vorbeschriebenen Problems.

Der Erfindung liegt die Aufgabe zugrunde, die Handhabung der Isolierflasche mit kostengünstigen Mitteln zu verbessern.

Diese Aufgabe wird durch das Kennzeichen des Anspruchs 1 gelöst.

Eine entsprechend ausgestaltete Isolierflasche läßt sich durch die Benutzung des Griffs leicht und bequem handhaben. Da der Griff zum einen gleichzeitig mit dem Schutzgehäuse geblasen wird, ergeben sich lediglich im Hinblick auf den vermehrten Material- und Werkzeugaufwand Mehrkosten, wobei die Materialkosten sich in einem vertretbaren Rahmen halten, weil der Griff hohl ausgebildet ist. Die vermehrten Werkzeugkosten lassen sich im Hinblick auf das Massenprodukt schnell amortisieren.

Die Ausgestaltungen nach den Ansprüchen 2 bis 5 verbessern ebenfalls die Handhabung, weil sie den manuellen Ein- bzw. Umgriff begünstigen. Diese Ausgestaltungen liegen gut in der Hand.

Darüberhinaus führt die Ausgestaltung nach Anspruch 3 zu einem Griff, der verhältnismäßig gering vom Schutzgehäuse absteht und deshalb die Fähigkeit der Isolierflasche, verpackt zu werden, kaum beeinträchtigt wird.

Auch die Ausbildung nach Anspruch 2 führt zu einem weiteren Vorteil, der zu einer befriedigenden Stabilität führt.

Gemäß Anspruch 6 ist das obere Ende des Griffs in der Nähe der Unterkante des Deckels angeordnet. Diese Ausbildung verbessert ebenfalls die Handhabung der Isolierflasche, weil im Hinblick auf den Schwerpunkt der Isolierflasche die Anordnung ein günstiges Verhältnis der Abstände ergibt, in denen beim Handhaben der Isolierflasche die Kräfte wirken.

Nachfolgend wird ein Ausführungsbeispiel der Erfindung anhand einer vereinfachten Zeichnung beschrieben.

Es zeigen

Fig. 1 eine erfindungsgemäß ausgestaltete Isolierflasche in der Seitenansicht

Fig. 2 die Isolierflasche in der Draufsicht.

Die allgemein mit 1 bezeichnete Isolierflasche besteht aus einem Schutzgehäuse 2, in dem ein nicht dargestelltes Aufnahmegehäuse für die Flüssigkeit angeordnet ist, einem verjüngten Gehäusehals 3, der der Befestigung eines Schraubdeckels 4 und einer Schutzhaube 5 dient, und zugleich einen nicht dargestellten runden Schüttrand bildet, der durch den Schraubdeckel 4 verdeckt ist, und einem einstückig an das Schutzgehäuse 2 angeformten Griff 6.

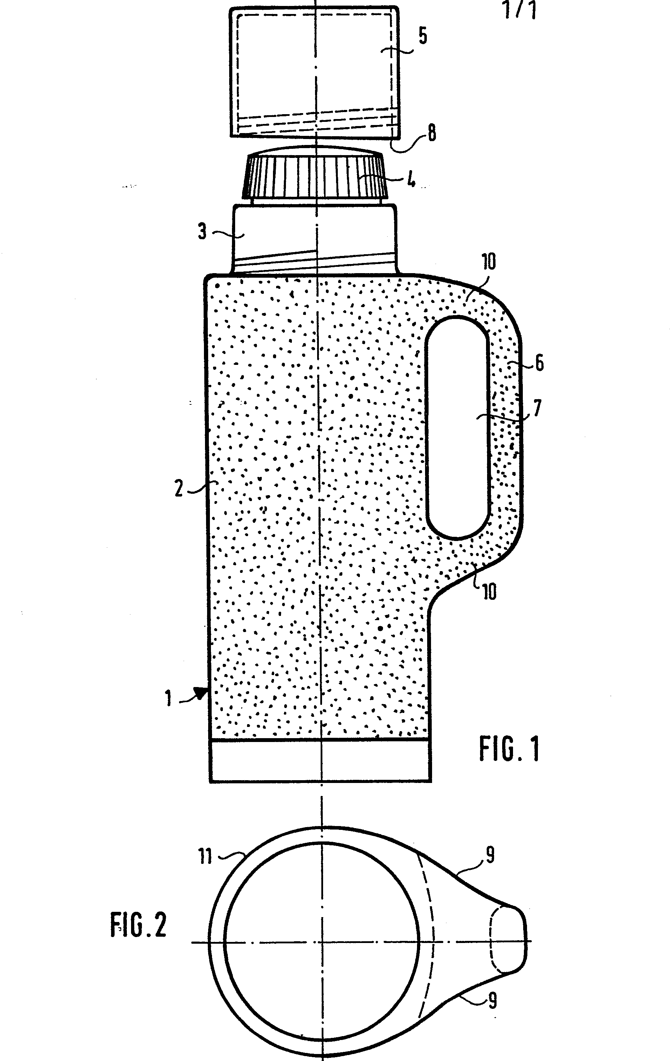

Der Griff 6 weist eine Grifföffnung 7 in Form eines Langlochs auf und beginnt direkt unterhalb des Gehäusehalses 3 bzw. direkt unterhalb der Unterkante 8 der aufgeschraubten Schutzhaube 5, die abgehoben dargestellt ist.
Wie am besten aus Fig. 2 zu entnehmen ist, ist der Griff 6 im Querschnitt etwa oval geformt und seine Seitenflächen 9 verlaufen im Bereich seiner ihn mit dem Schutzgehäuse 2 verbindenden Stege 10 etwa tangential zur Mantelfläche 11 des Schutzgehäuses 2.

Die in der Fig. 1 dargestellten Punkte auf dem im wesentlichen zylindrischen Schutzgehäuse 2 und dem Griff 6 stellen eine Narbung der Oberfläche dar.

ANSPRÜCHE

1. Isolierflasche für Flüssigkeiten mit einem Isoliergefäß, das von einem Schutzgehäuse umgeben ist, und mit einer oberen Einfüll- bzw. Ausgießöffnung, wobei das Schutzgehäuse am Öffnungsrand einen rund umlaufenden Schüttrand aufweist und die Einfüll- bzw. Ausgießöffnung durch ein Verschlußglied verschließbar und gegebenenfalls durch eine Schutzhaube abdeckbar ist,
dadurch gekennzeichnet,
daß das im Kunststoff-Blasverfahren hergestellte Schutzgehäuse (2) einen einstückig angeformten hohlen Griff (6) aufweist.

2. Isolierflasche nach Anspruch 1,
dadurch gekennzeichnet,
daß die Seitenflächen (9) der den Griff (6) mit der Mantelfläche (11) des Schutzgehäuses (2) verbindenden Stege (10) etwa tangential zur Mantelfläche (11) verlaufen.

3. Isolierflasche nach Anspruch 1 oder 2,

   dadurch gekennzeichnet,

   daß die Grifföffnung (7) die Form eines etwa gleichmäßig breiten Langlochs hat.

4. Isolierflasche nach einem der Ansprüche 1 bis 3,

   dadurch gekennzeichnet,

   daß der Griff im horizontalen Querschnitt oval geformt ist.

5. Isolierflasche nach einem der Ansprüche 1 bis 4,

   dadurch gekennzeichnet,

   daß wenigstens die Außenfläche des Griffs (6) genarbt ist.

6. Isolierflasche nach einem der Ansprüche 1 bis 5,

   dadurch gekennzeichnet,

   daß das obere Ende des Griffs in der Nähe der Unterkante (8) der aufgestzten Schutzhaube (5) oder des
   aufgesetzten Verschlußgliedes (4) angeordnet ist.

0146758

1/1

FIG. 1

FIG. 2

# Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | US-A-3 664 553  (RICKMEIER Jr.)<br>* Spalte 4, Zeilen 57-66; Figur 1 * | 1,6 | A 47 J   41/00 |
| X | DE-A-2 531 675  (VEB)<br>* Seite 5, letzter Absatz * | 1 | |
| A | FR-A-2 352 717  (DELAUNAY)<br>* Insgesamt * | 1 | |
| A | DE-U-8 407 009  (ZIMMERMANN)<br>* Figur 1 * | 3 | |
| A | US-A-3 362 590  (MARTIN)<br>* Insgesamt * | 1 | |

RECHERCHIERTE SACHGEBIETE (Int. Cl.4)

A 47 J
A 47 G

Der vorliegende Recherchenbericht wurde für alle Patentansprüche erstellt.

| Recherchenort | Abschlußdatum der Recherche | Prüfer |
|---|---|---|
| DEN HAAG | 05-03-1985 | SCHARTZ J. |